# EUROPEAN PATENT APPLICATION

(11) **EP 4 793 024 A1**
(43) Date of publication of application: **19.08.2026**
(21) Application number: 26169959.9
(22) Date of filing: 15.11.2023
(51) Int. Cl.: B29C 63/06, B29C 53/38, D04B 21/16, D04B 21/20, D04B 21/14, F16L 55/165, B29D 23/00

(54) **MATERIAL FOR USE IN LINING PIPES**

(30) Priority: 15.11.2022 GB 202217062
(62) Document number(s) of the earlier application(s) in accordance with Art. 76 EPC: 23813042.1 / 4 619 221
(71) Applicant: Scott & Fyfe Limited, Tayport, Fife DD6 9EE (GB)
(72) Inventor: Tough, David, Fife, DD6 9HX (GB)
(74) Representative: Stevens Hewlett & Perkins

(57) **Abstract**

A material for use in lining pipes includes inlay yarns that are interlinked by warp-knitted yarns. One set of inlay yarns extends in a machine direction, contributing to the fabric's strength in this direction. Two further sets of inlay yarns follow paths that step alternately between displacements to the left and right. This construction results in a series of short lengths of yarn aligned to provide the fabric with cross-directional strength. The inlay layers are loosely held, allowing them to slide relative to each other and the straight inlay yarns may move apart to a small degree. The result is a strong, flexible fabric that retains sufficient expansion for use in a pull-in-place liner.

A method of preparing a multilayered pipe-lining fabric involves repeated steps of layering flat sheets above and below a flattened carrier tube, bonding the sheets, then flattening the structure along fold lines circumferentially rotated from the first. Longer length and larger diameter tubular structures may be fabricated by this method, particularly heavier fabrics, such as those incorporating glass fibres.

## Description

This invention relates to flexible lining material, in particular to a material that is used in the repair or rehabilitation of pipes, conduits and the like. Such a material is expected to find particular application in the rehabilitation of domestic and industrial water pipes, sewage pipes, steam pipes and others that are commonly found underground and involved in the delivery of services to urban locations.

The network of pipes in the modern environment is extensive. Mains pipes carry large volumes of water to a neighbourhood; other pipes lead from the mains to, for example, a street and from there smaller pipes divide out and convey fresh water for use in individual buildings and houses. Drainage pipes carry in reverse: from within buildings they take domestic waste to underground drains and thereafter to the public sewers.

It is invariably the case that a pipeline leak is problematic. It allows not only the leak of material out of the pipe (exfiltration) but also, in the case of underground or underwater pipes, the flow of substances into the pipe (infiltration). Both are undesirable. Sewage pipes may, for example, leak harmful waste products into the soil. A freshwater pipe on the other hand must remain watertight to prevent contamination of the water supply from the environment in which the pipe is laid. Leaks from domestic pipes can cause damp, mould and noxious smells. A burst water main can severely disrupt activity in its locality.

A pipeline leak must therefore be repaired quickly. The cure in place pipe (CIPP) methods of repair involve insertion of a resin-soaked tubular textile material into a pipeline. The resin is then cured *in situ* to form a composite structure of textile-reinforced hardened resin. There are a number of known CIPP installation procedures, which can be broadly categorised into pull-in-place and inversion installations. Both procedures are commonly used in the repair and rehabilitation of underground pipes as it avoids the environmental impact of excavation trenches that are otherwise needed to access the damaged pipeline. The relatively light weight of the fabric lining material and general ease in handling means that the CIPP method of repair is increasingly being used to repair larger diameter pipes and offshore pipelines such as found in the oil and gas industry.

A pull-in-place installation requires access at both ends of the pipe to be repaired. A cable is run along the length of the pipe between access points. A resin-soaked liner is attached to one end of the cable and then pulled carefully from one access point towards the other until it reaches the required repair position. An inflatable balloon, known as a calibration hose or tube, is used to sequentially inflate the resin-saturated liner from one access point to another and to press it tightly against the existing pipe in preparation for curing.

In carrying out an inversion installation use is primarily made of a single access point. The liner for this installation will have a foil or film coating on the outside and is impregnated with resin on its inner surface. The liner is wound into an inversion unit, with its trailing end attached around the exit nozzle. A high-pressure driving mechanism such as compressed air or water is blown into the liner, driving it out of the nozzle, along the pipe and inverting it in the process. Simultaneously, the driving fluid presses the now inverted liner against the pipe inner surface. Limited access is required at the sealed end once the liner is in place. This must only be sufficient however for the end to be opened and avoid blocking the pipe.

Each cure-in-place installation process has its own advantages and disadvantages. Regardless of which is used however, the liner is held against the pipeline as the resin is cured. After curing, the pressure is released and any insertion devices, bladders or calibration tubes removed, leaving a cured-resin tubular repair on the inner surface of the original pipeline structure.

A variety of materials can be used to form the textile base layer. This textile layer must be able to retain the resin as the liner is manoeuvred into position for curing. **It** should also be flexible, chemically-resistant and durable to enable it to withstand the installation process. For some applications it must also be expandable such that it is able to conform to pipe bends and changing diameters. Liners based on knitted, felt, and woven materials have all been successfully used in pipe repair. The properties of the fabric however tend to be adapted to one or other of the installation processes. Inversion and pull-in-place installations demand different physical tolerances from a liner material. A warp-knitted fabric that is particularly suited to inversion installations is described in WO2015/166268. The warp knit is designed to give this textile material high flexibility and conformability, which allows it to be more readily inverted. Moreover, these properties also improve the ability of a liner of such material to maintain its integrity around bends and to cope with junctions between different diameter pipes. For pull-in-place installations the fabrics tend to be less flexible as there is not so much manipulation required during installation. There is also less likelihood of the fabric being required to line a bend or pipeline section that includes a diameter change, reducing the need for the fabric to be expandable. This allows fabric design to concentrate on other properties such as strength and temperature stability. One current material is a fabric of polyester fibres needled into a dense felt. As alternatives, polypropylene or polyethylene fibres may be used, either in combination with polyester or alone, and the felt may further be reinforced with a strengthening material such as glass fibre.

There are various physical requirements that should ideally be met by a liner intended for pull-in-place applications, which are not necessarily all satisfied by a single fabric that is currently in use. **In** any situation therefore, a liner is selected whose properties best fit its most important criteria, but this requires knowledge of the use to which the pipe is put and expertise on the part of the person carrying out the repair. **It** is desirable however to reduce the level of skill and effort expended at the installation site as this is reflected in a reduced likelihood of errors and a, not unrelated, reduction in installation cost. There is accordingly a requirement for a new type of liner material that is particularly suited to pull-in-place installations and that may be used to repair a range of pipes with little attention given to a specific application and / or environment.

In addition, there is an increasing demand for liners that are capable of lining pipes of longer length and larger diameter. However scaling up production of tubular liners has proven problematic. In particular, woven and knitted fabrics are machine produced and the size of the machine limits at least one dimension of the resultant fabric. Increasing machine size is possible but such retooling is generally prohibitively expensive. There is therefore a further need for a fabrication process that is capable of producing tubular liners with an increased range of diameters and that may be fabricated in longer lengths.

According to a first aspect of the present invention, there is provided a method of preparing a multilayered fabric for use in lining pipes, the method comprising the steps of:
(a) Providing a flattened carrier tube with first fold lines defined by flattened edges of the tube;
(b) Placing a first fabric layer above the carrier tube, with intermediate adhesive, and a second fabric layer below the carrier tube, with intermediate adhesive, each of the first and second fabric layers having a width that is approximately equal to or greater than a width of the flattened carrier tube, the placing being such that each edge of the flattened carrier tube is aligned with at least one edge of at least one of the fabric layers;
(c) Laminating the carrier tube and fabric layer assembly;
(d) Opening and re-flattening the coated carrier tube such that the carrier tube has second fold lines defined by its flattened edges, wherein the second fold lines are not coincident with the first fold lines;
(e) Placing a third fabric layer above the laminated carrier tube assembly, with intermediate adhesive, and a fourth fabric layer below the laminated carrier tube assembly, with intermediate adhesive, each of the third and fourth fabric layers having a width that is approximately equal to or slightly than a width of the flattened laminated carrier tube assembly, the placing being such that each edge of the flattened laminated carrier tube assembly is aligned with at least one edge of at least one of the fabric layers; and
(f) Laminating the laminated carrier tube assembly and third and fourth fabric layers.

This method provides an adaptable procedure that can be used to fabricate liners with a variety of thicknesses, diameters, lengths and characteristics. In particular, it may be employed to make liners of longer lengths and larger diameters than may be achieved by straightforward application of the methods of the prior art. A known problem with scaling up liner fabrication methods is that as the size of the tube increases, the fabric becomes increasingly difficult to handle. Not only the dimensions, but the weight of fabric increases, making it extremely difficult to manipulate though the machinery that is used to build up the layers. With this present method however, individual fabric sheets, which are a fraction of the weight of the completed liner, are handled as required and manipulation of the assembled liner is limited. In particular, it is possible using this method to place all the fabrication machinery inline and so the liner has only to be conveyed from one station to the next as additional layers are added.

This method is moreover adaptable to processing fabrics for high-strength applications in which glass is likely to be a significant component. Glass is a heavier material than alternatives such as polyester, nylon and polypropylene and so the incorporation of glass will make the liner even more difficult to handle.

Finally, this method is adaptable to building up any layered structure. Fabrics with different properties can be layered one upon the other, each contributing a particular characteristic (e.g. strength, porosity) to the overall performance of the tubular fabric.

The width of the first and second fabric layers may be greater than the width of the flattened carrier tube and each aligned at one edge with a respective edge of the flattened carrier tube; and the width of the third and fourth fabric layers may be greater than the width of the flattened laminated carrier tube assembly and each aligned at one edge with a respective edge of the flattened carrier tube assembly. This means that, in the prepared fabric, narrow longitudinally extending regions of an additional layer's thickness are formed where each fabric layer overlaps the fabric layer that is subject to the same placing step. Alternatively, the width of the first and second fabric layers may be substantially equal to the width of the flattened carrier tube and the width of the third and fourth fabric layers may be substantially equal to the width of the flattened laminated carrier tube assembly. With this arrangement, the fabric layers subject to the same placing step abut each other in the finished fabric product. In either case the seams that join the two fabric sheets together to form the tubular structure are not located at the same position throughout the layers. The inherent structural weakness of the seam is distributed about the circumference of the liner. This makes the finished product less liable to failure under stress or continuous usage.

The method may include the additional steps of:
(g) Opening and re-flattening the laminated carrier tube assembly such that the carrier tube has third fold lines defined by its flattened edges, wherein the third fold lines are not coincident with either the first or second fold lines;
(h) Placing a fifth fabric layer, with intermediate adhesive, above the laminated carrier tube assembly and a sixth fabric layer, with intermediate adhesive, below the laminated carrier tube assembly, each of the fifth and sixth fabric layers having a width that is approximately equal to or greater than a width of the flattened laminated carrier tube assembly, the placing being such that each edge of the flattened laminated carrier tube assembly is aligned with at least one edge of at least one of the fabric layers; and
(i) Laminating the laminated carrier tube assembly and fifth and sixth fabric layers.

By repeating the steps of forming, layering and laminating, the liner structure can be built up to the thickness required. Properties can be further tailored by adjusting individual layer fabric type and characteristics.

Alternatively, a subsequent layer can be added by opening and re-flattening the laminated carrier tube assembly such that the carrier tube again has flattened edges at the first fold lines. The fifth and sixth layers are then placed as above, each of the fifth and sixth fabric layers having a width that is greater than a width of the flattened laminated carrier tube assembly and each aligned at one edge with a respective edge of the flattened laminated carrier tube assembly. In this embodiment, the placing step is such that each narrow longitudinally extending region of an additional layer's thickness arising where the fifth and sixth fabric layers overlap is disposed to an opposite side of the respective first fold line to the narrow longitudinally extending region arising where the first and second fabric layers overlap. These steps are also followed by one of laminating the laminated carrier tube assembly and fifth and sixth fabric layers.

The intermediate adhesive may be applied to each fabric layer prior to its placing above or below the carrier tube or carrier tube assembly. Alternatively, it may be in the form of an adhesive web.

According to a second aspect of the invention, there is provided a material for use in lining pipes, the material comprising:
a first set of inlay yarns, each yarn of which has a path that is achieved by moving a first predetermined number of needle positions to the left and then a second predetermined number of needle positions to the right in successive stitch-forming processes;
a second set of inlay yarns that extend in a machine direction through the fabric;
a third set of inlay yarns, each yarn of which has a path that is achieved by moving a third predetermined number of needle positions to the left and then a fourth predetermined number of needle positions to the right in successive stitch-forming processes; and
a set of warp-knitted yarns that interlink with the inlay yarns.

This fabric possesses many characteristics that make it particularly suited to pull-in-place pipe repair applications: strength can be tuned in both the machine and cross directions by a straightforward adjustment of machine parameters; the fabric possesses sufficient flexibility to allow manipulation into position within a pipeline; and it remains sufficiently expandable for compression against the walls of the pipe during curing. This advantageous combination of features cannot be found in prior art fabrics and is a consequence of the novel structure set out above.

The alternating movements to the left and right in the paths followed by the first and third sets of inlay yarns result in a series of short lengths of yarn that are aligned generally at an angle to the cross direction of the fabric. Or, more correctly for each inlay, at two angles: one in a positive direction for a left to right movement and the second in a negative direction for a right to left movement. This angle can be tuned by adjusting the number of needle positions stepped to the left or right but, generally, the strength of this short length of yarn contributes significantly to the strength of this fabric in its cross direction. By way of contrast, the alignment of the second set of inlay yarns are the primary source of fabric strength in the machine direction. The relative strengths of the fabric in the machine and cross directions can be tuned by adjusting the number of needles stepped, the inlay yarn material used, the number of inlay layers provided, the knit parameters, etc. Within the yarn structure, the second (straight) set of inlay yarns is sandwiched between the first and third (stepped) sets of inlay yarns and so the straight yarns are, to some extent, held in place by these stepped yarns. Moreover, the various layers of this structure are held together by the warp-knitted yarn that interlinks with the inlay yarns. This may, for example, be a chain stitch that loops across all four bars. With this arrangement, the layers are only loosely held in position and remain free to slide relative to one another, which feature contributes to the fabric's flexibility. Moreover, the straight yarns of the second inlay are free to move apart to a small degree, whilst still being held by the stepped inlay and warp-knitted yarns. This enables the fabric to expand readily in the cross direction, at least to the extent required for radial expansion in a pull-in-place pipe installation.

Preferably, the first predetermined number of needle positions is the same as the second predetermined number of needle positions such that the path followed by the first set of inlay yarns extends to one and then another side of an axis that is generally parallel to the machine direction. Similarly, the third predetermined number of needle positions is preferably the same as the fourth predetermined number of needle positions. Ideally, the number of needle positions moved in all the stepped inlays is the same. This arrangement is the most efficient in terms of creating a fabric with desired properties. As the short lengths of yarn in the stepped inlays will be aligned at the same angles (positive and negative) to the cross direction, the conflicting requirements of strength and flexibility are best satisfied within the fabric. If this were not the case, the overall strength of the fabric in the cross direction would be limited by the weaker orientation of inlay steps (e.g. 2-needle as opposed to 6-needle) and fabric movement would be restricted by the less mobile arrangement (e.g. 6-needle as opposed to 2-needle).

The paths followed by the first set of inlay yarns are preferably aligned with the paths followed with the third set of inlay yarns. That is, the two layers are in register such that they loop in the same direction (clockwise or anticlockwise) at the corresponding needle positions. Again, this arrangement ensures better alignment of the short lengths of yarn that extend substantially in the cross direction.

Ideally, the predetermined number of needle positions is 4. It is anticipated that a practical range would be a step of somewhere between 2 and 8 needle positions. Increasing this number aligns the short lengths of yarn in the inlays more closely with the cross direction. This will increase the strength of the fabric in this direction, but will reduce the expansivity. A step of 4 needle positions represents a compromise that is likely to best suit the majority of pull-in-place installations.

A number of different materials could be used for the first, second and third sets of inlay yarns. For example, glass fibre, polyester, aramid, Dyneema^{®}, peek (polyether ether ketone) and basalt yarns; glass or basalt rovings. It is preferred however that these yarns are all glass fibre. Glass fibre is advantageous as glass is a particularly strong material, making fabrics with glass inlays stronger for a comparable weight of material. Moreover glass is an inert material that is easily resinated and also stabilised by cured resin. All these characteristics are advantageous in pipeline repair applications.

The warp-knitted yarn may also be formed of a number of materials, although requirements for its characteristics are different from those of the inlay yarns. Heavier yarns may be chosen if the fabric is to have more bulk. Another consideration is that this fabric is specifically designed for incorporation in a liner. A liner is generally a multi-layered structure and so this fabric must retain its desirable characteristics when adhered to adjacent layers. In particular, any adhesive applied to the fabric should be preferentially held on the warp-knitted yarn and so kept away from the inlay layers, which need to retain their ability to slide over each other. Depending on performance therefore, the warp knitted yarn may, for example, be polyester, polypropylene, nylon or, preferably glass fibre.

The material may further include a fourth set of inlay yarns that extend in a machine direction through the fabric and a fifth set of inlay yarns, each yarn of which has a path that is achieved by moving a fifth predetermined number of needle positions to the left and then a sixth predetermined number of needle positions to the right in successive stitch-forming processes. Ideally, the first, second, third, fourth, fifth and sixth predetermined numbers of needle positions are all equal. Adding additional layers in this manner to the basic structure of the fabric provides a mechanism by which fabric properties can be adjusted. For example, the ratio of hoop to axial strength is reduced by addition of these two further inlay layers (one stepped and one straight), and fabric weight and thickness increased. Further pairs of inlay layers may be added, as required.

In a third aspect, the present invention provides, a liner for pipe repair or rehabilitation, the liner comprising a material as described above that is arranged in a tubular configuration with the second set of inlay yarns aligned with a longitudinal axis of the tubular configuration. That is, the fabric can be formed into a tubular structure, with the straight inlays providing its axial strength and the stepped inlays providing hoop strength. The reference to "tubular configuration" is understood to include a flattened tube. In particular, the tubular liner may be flattened, especially prior to and during a pipe-insertion process.

Preferably, the material in a tubular configuration is attached to an inner carrier tube. In some embodiments, the liner includes at least two layers of the material in a tubular configuration, an inner layer being attached to the carrier tube. The fabric layers provide the liner with the combination of flexibility, strength and expansivity that are required for pull-in-place installations. Further advantageous properties may be provided by the carrier tube. First, the carrier tube may be used to support the fabric during processing to form the liner assembly. In addition, it may be a film tube that provides the liner with a waterproof inner layer. Alternatively, the inner carrier tube may be a knitted tube. In either case, the tube may be fabricated in its tubular form or it may be a flat sheet that is subsequently formed into a tube. If it is a film, then the composition is not generally critical; indeed for most purposes any readily-available tube will suffice. For example, the film may be single material or a coextrusion. The tube may include a felt layer adhered to the film.

The liner may also include an outer layer that contributes additional properties. For example, the outer layer may be of a substance that is substantially opaque to ultraviolet (UV) light. This barrier layer will prevent curing if the liner is infused with resin of a type that is cured by exposure to UV light. This permits a resinated liner to be prepared away from an installation site and transported safely to the site, without the risk that the resin starts to cure. This reduces the work required to be carried out at the installation site. By way of contrast, epoxy resins often need to be mixed and then infused on site as, once mixed, curing will begin. Working with epoxy resins therefore not only makes the installation procedure more complex, it also adds an element of time pressure.

In another aspect, the present invention provides a liner for pipe repair or rehabilitation, the liner comprising a first tubular fabric one end of which is connected by a sewn seam to an opening made in a fabric sheet of a material as described above, the fabric sheet being configurable to a tubular configuration from which the sewn first tubular fabric extends in lateral direction.

Ideally, at least one of the fabric layers used in the method that is a first aspect of this invention is a material as described in relation to the second aspect of this invention and wherein the step of placing the fabric layer above the carrier tube or carrier tube assembly includes the step of aligning the second set of inlay yarns with a longitudinal axis of the carrier tube.

In a further aspect, the present invention provides a method of producing a fabric to reinforce a resin, the method comprising:
(a) Determining required strength of fabric in a machine direction;
(b) Determining required strength of fabric in a cross direction;
(c) Selecting first and second sets of bars of a warp knitting machine, wherein adjacent bars are selected in different sets, there being one more bar in the second set than the first;
(d) Setting each of the first set of bars to produce a straight inlay in the machine direction, wherein the number of bars in the first set depends on the strength determined in step (a);
(e) Setting each of the second set of bars to produce a stepped inlay in which yarn paths within the inlay move a predetermined number of needle positions to the left and then the predetermined number of needle positions to the right in successive stitch-forming processes, whereby alternating movements to the left and right result in a series of short lengths of yarn that are aligned generally at an angle to the cross direction, wherein the predetermined number of needle positions moved and number of bars in the second set depend on the strength determined in step (b);
(f) Setting a further bar of the warp knitting machine to produce a warp-knitted yarn that interlinks with the straight and stepped inlays in an arrangement sufficiently loose to allow yarns within the straight and stepped inlays to move relative to each other ;
(g) Loading each bar of the first and second sets of bars on the warp knitting machine with an inlay yarn and the further bar with an interlinking yarn; and
(h) Operating the machine to produce a fabric.

In this aspect, the present invention effectively provides a convenient "recipe" to fabricate a reinforcing fabric with properties tailored to the specific requirements of an intended application. In particular the method provides a mechanism by which strength of the fabric in machine and cross directions are adapted as required.

In order to provide further flexibility in the performance characteristics of the resulting fabric, the method may additionally include the step of selecting the inlay yarn from the group consisting of: glass fibre, polyester, aramid, Dyneema^{®}, peek and basalt yarns; glass or basalt rovings. It may further include the step of selecting the interlinking yarn from the group consisting of: glass fibre, polyester, polypropylene and nylon yarns.

Ideally, the predetermined number of needle positions moved to the left and right in the stepped inlay is selected from the group consisting of: 2, 3, 4, 5, 6, 7 or 8.

The invention will now be described, by way of example only, and with reference to the accompanying drawings, in which:
Figures 1a, 1b and 1c illustrate schematically a method of construction of a multilayer fabric in accordance with this invention;
Figure 2 is a representation of a multilayered liner that incorporates at least one layer of a textile material in accordance with this invention;
Figure 3 is a binding diagram illustrating a knitting structure used on each bar for a preferred embodiment of the textile material in accordance with this invention;
Figures 4a, 4b, 4c and 4d illustrate schematically different layers in a fabric as they are built up by the 4-bar knit represented in Figure 3;
Figures 5a and 5b are photographs of the textile material of this invention in, respectively, an unstretched configuration and a configuration adopted when stretched along a cross direction;
Figures 6a, 6b and 6c are schematic illustrations of the steps involved in forming a T-shaped liner that incorporates a flat sheet of textile material in accordance with this invention; and
Figure 7 is a binding diagram illustrating a knitting structure used on each bar for a second embodiment of the textile material in accordance with this invention.

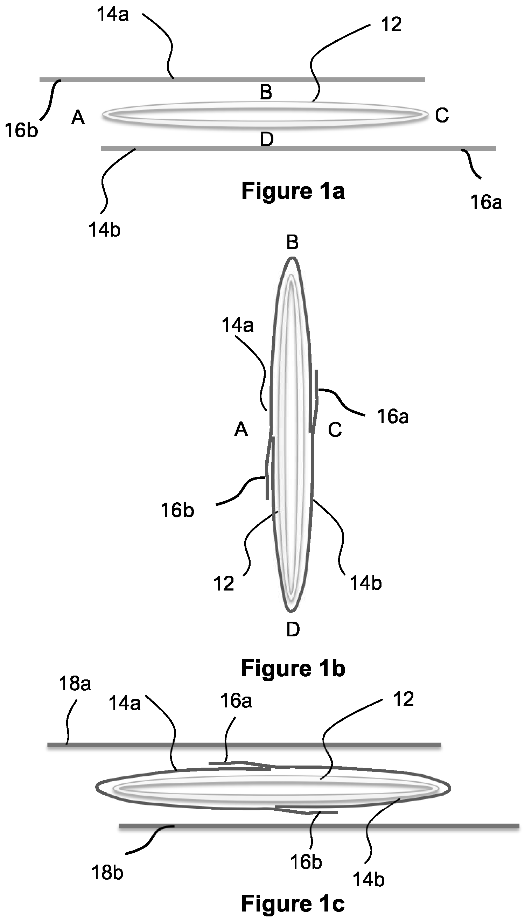

With reference to Figures 1a to 1c, there is shown a method by which a multilayered tubular liner is assembled in a manner that can be adapted to fabricate longer lengths and larger diameters.

A carrier tube 12 is used as a base support layer. The carrier tube 12 may be any of a number of materials that can be formed into a tube of an appropriate size. That is, it may be a tubular film, tubular fabric or a fabric sheet that made tubular by sewing a longitudinal seam. It may further have additional properties that contribute to the performance of a finished liner. For example, the carrier tube 12 may be an extruded plastic tube that provides a waterproof layer to the finished liner. What is important though is that the carrier tube 12 should not hinder any performance requirements of the finished liner product. In the present embodiment, the liner is a flexible glass fibre knitted tube supplied by Scott & Fyfe Limited and that is used in their AlphaDuct^{™} product. The carrier tube 12 has the primary function of supporting the liner as it is manipulated through the fabrication process. It is dimensioned such that its length and (inner) diameter correspond with those of the finished liner product.

The liner itself is fabricated from flat sheets 14a, 14b of fabric material. Each sheet is machine produced to a width that is slightly greater than half the circumference of the finished liner product. The length of each fabric sheet corresponds with that of the carrier tube and of the finished product. The fabric material 14a, 14b may be any of a number of fabrics that are appropriate for use in lining pipes. The fabric may be selected with regard to installation method or application. In this embodiment, it is preferred that the fabric is a novel material that is designed to satisfy the specific requirements of a pull-in-place installation in high-pressure pipelines, such as those that convey potable water. The structure of this fabric will be described later but it is emphasised that the presently-described method is not limited with regard to liner fabric material.

A first stage of the liner assembly process in shown in Figure 1a. The carrier tube 12 is flattened, as shown in the cross-sectional view of this figure. One side of each fabric sheet 14a and 14b is coated with adhesive and the sheets 14a, 14b are positioned such that one 14a is above the tube 12 and the other 14b below, with the adhesive between sheet 14a, 14b and tube 12. Each fabric sheet 14a, 14b is aligned along one side longitudinally with a respective side of the flattened carrier tube 12. This leaves a first short length 16a of fabric extending to one side below the tube 12 and a second short length 16b extending to the other side above. In this configuration, the layered material is passed through a flatbed laminator. The laminator uses pressurised heating and cooling of the structure to melt the adhesive and to seal the fabric sheets 14a, 14b to the carrier tube 12.

On leaving the laminator, the combined structure is re-folded using a former. The former is a pyramidal-shaped element that separates the closed faces of the flattened carrier tube 12 whilst the original longitudinally folded edges are pressed inwards. The result is shown in cross-section in Figure 1b. A new fold is made at what was formerly a central position on the flattened tube (labelled with B and D on Figures 1a and 1b) and the tube is re-flattened at its original fold (labelled with A and C in Figures 1a and 1b). The tube 12 has been reoriented from being flattened in a horizontal direction (Figure 1a) to being flattened in a vertical direction (Figure 1b). As is apparent from Figure 1b, this leaves the first 16a and second 16b short lengths of each fabric liner sheet 14a, 14b overlapping edge portions of the other fabric liner sheet 14b, 14a.

In this refolded orientation, the combined structure is rotated through 90° and a second pair of liner sheets 18a, 18b, one side coated with adhesive, are placed respectively above and below. Alignment of this second pair 18a, 18b of fabric sheets is the same as that of the first pair 14a, 14b. That is, one edge of each sheet 18a, 18b is aligned with a respective (new) folded longitudinal edge of the combined structure, leaving short overlaps of the fabric at the opposite folded edge. This configuration is shown, viewed along the length of the carrier tube 12 and liner structure, in Figure 1c. As is apparent in the Figure, the short lengths 16a, 16b of the first pair of fabric sheets 14a, 14b form a region of the liner structure that has an additional layer of thickness that extends longitudinally along the flat faces of the flattened liner.

The assembly as shown in Figure 1c is then passed again through a flat-bed laminator. This may be the same flat-bed laminator as for the previous pass, or it may be a different laminator positioned in line with the first. After this process, the second pair of fabric sheets 18a, 18b is sealed to the first pair 14a, 14b and the combined liner structure has been built up by an additional fabric layer.

The second pair of fabric layers 18a, 18b may be the same or different from the first pair of fabric layers 14a, 14b, either in material or structure. This feature provides the opportunity for tailoring the structure of the assembled liner product to best suit the requirements of any particular application.

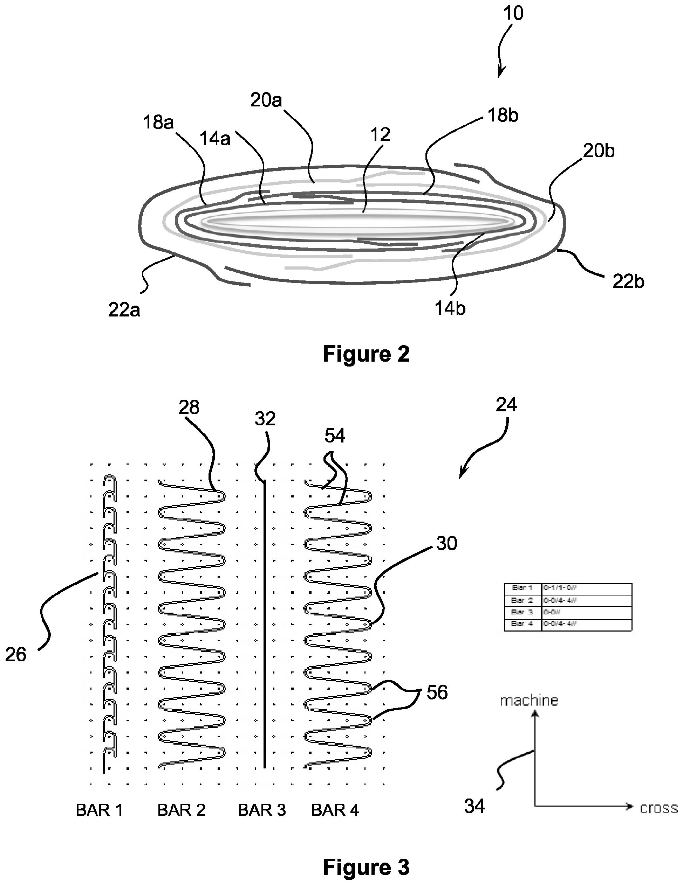

The above process is then repeated with this laminated 2-layer liner structure. It is passed through a former, which may or may not be the same former as carried out the previous refolding. Regardless of whether it is reused or not, the former this time refolds along a different fold line that, ideally, is displaced from the original fold line. A further pair of fabric sheets 20a, 20b (see Figure 2), coated with adhesive, are positioned above and below the flattened 2-layer structure, with the assembly then being passed again through the laminator. By these steps, a third fabric layer is added to the liner structure.

By repeating the steps of forming, layering and laminating, the liner structure can be built up to the thickness required, with properties tailored by adjusting individual layer fabric type and characteristics, if desired. An exemplary completed 4-layer liner structure 10 is shown in Figure 2. As indicated, pairs of fabric sheets 14a, 14b; 18a, 18b; 20a, 20b; 22a, 22b are sequentially built up on the carrier tube 12. In each case, the fold position of the carrier tube extends longitudinally along the length of the tube, but is positioned differently about its circumference. In consequence, the overlap formed where the short length 16a, 16b of one sheet 14a, 14b overlaps the corresponding second sheet of its pair is also staggered around the circumference. The resultant liner structure therefore deviates from uniformity only insofar as it includes a single additional layer at certain, separated regions of the liner. The variation in liner profile is therefore kept small, and the liner is relatively symmetric physically. This, in turn, leads to more uniformity in liner performance. Importantly, the fabric properties are not affected by a singular seam: although a sewn seam may be relatively strong, it is still significantly weaker than the rest of the fabric. With this method of fabrication, the inherent structural weakness created by the seam is mitigated by its distribution around the liner.

In an alternative arrangement, the four liner layers may be applied by alternating between two fold lines, oriented at 90°. In order to minimise the non-uniformity in cross section, the overlaps should extend in opposite directions from the fold line. That is, the fifth and sixth sheets should be arranged such that their overlap extends from the fold line away from the overlap between the first and second sheets. Similarly, the overlap between seventh and eighth sheets should extend away from that formed between third and fourth sheets.

In alternative embodiments, adhesive is not applied to the fabric sheets 14a, 14b; 18a, 18b; 20a, 20b; 22a, 22b prior to assembly. Instead, the fabric sheets are bonded to the structure by means of an adhesive web that is placed above and below the refolded structure, intermediate the structure and fabric sheet that is next to be added. This layered structure is then passed through the laminator and, as before, heat melts the adhesive, bonding the two layers together.

The primary advantage of this method of building up the liner structure 10 is that it simplifies the fabrication of liners with longer lengths and larger diameters when compared with previously known production methods. The problem with constructing longer and wider tubular fabrics is that as the size of the tube increases, the fabric becomes increasingly difficult to handle. Not only the dimensions, but also the weight of fabric increases, making it extremely difficult to manipulate through the machinery required to build up each layer. Moreover, such problems are exacerbated in high-strength applications in which glass may be used in increasing proportions. Although glass fibre is particularly strong, it is also a heavier material than alternatives such as polyester, nylon and polypropylene. With this present method however, manipulation of the liner is limited. In particular, if each layer is added using a former and laminator dedicated to that layer, the fabrication machinery may all be placed inline and the liner has only to be conveyed from one station to the next as additional layers are added.

In one exemplary application, 300 m of a 200 mm diameter tubular fabric may weigh in the region of 888 kg. By using the method of the present invention, this size tubular structure may be built up of a glass carrier tube, weighing 120 kg for the length required and eight fabric sheets, each weighing 96 kg. The individual components are smaller and considerably lighter than the finished product, each therefore being more easily handled. With the method described herein, manipulation of the final tubular product is limited to conveying the fabric, possibly even avoiding changing its direction of travel.

This method is further advantageous in that it enables larger-diameter liner products to be fabricated without retooling any machinery. In general, if a flat fabric sheet is formed into a tubular shape, the diameter of the tube is limited by the width of fabric that can be produced on the relevant knitting (or other) machine. Larger machines could be used to fabricate larger fabric sheets, but this would require significant financial investment, which would likely be prohibitive. With this present invention however, tubes of twice the diameter may be obtained without changing the production machinery.

In another embodiment, the short lengths 16a, 16b that form the overlap may derive from the same sheet. Or they may simply not be present and the sheet pairs 14a, 14b that are used to build the liner structure 10 are sized such that their longitudinal edges abut each other, rather than forming an overlap. This embodiment retains the feature of the weaker seam region being distributed about the liner structure, without introducing the same degree of asymmetry in liner thickness. It is therefore, similarly, less likely to fail when the liner is subjected to pressure or continued use.

In other embodiments, the former may be configured to refold the structure such that the fold points are moved a set number of degrees between each stage of the process. That is, not to start with the 90° reorientation shown between Figures 1a and 1b. For example, successive refolds with a 60° rotation may be used to distribute six fold points around the liner circumference, which is preferred if three layers are to be built upon the carrier tube. With a 45° movement, four layers may be built up with eight distributed fold points. The different refolding positions may be achieved by using an appropriate design of former.

Another significant advantage of the method described herein is that it offers flexibility in building up a layered structure. There is no requirement for all the fabric sheets to be identical, and incorporating different layers may improve overall performance in some way. For example, a structure fabricated from a series of high-strength layers may be particularly strong but it may also have a dense yarn structure that inhibits resin permeation. Ease of resination is, of course, an important factor in overall liner performance. To improve the flow of resin into the liner walls, the structure may include an intermediate layer of a spacer fabric, which more readily draws in resin than the high-strength layers.

In another example, the outer layer may be a film or material that blocks ultraviolet (UV) radiation. Many resins are cured by application of UV light. In pipe repair applications, it is a relatively straightforward process to insert a UV light inside a liner once it is in place and to cure the resin in a controlled manner. By way of contrast, the application of heat to a heat-cured resin is more difficult to control. In particular, many epoxy resins are prepared at the point of application by mixing two components, which have been stored separately. Once mixed, curing will start and this imposes a time-limitation on getting the resin into the liner and the liner into position within the pipe. An outer UV barrier, as incorporated in this embodiment, therefore allows a liner to be pre-resinated with a UV-curable resin, prior to installation. The barrier layer prevents undesired curing by daylight exposure during transportation to an installation site. Moreover, once at the site, no time limits are imposed on an installation procedure that uses a UV-cured resin.

A first embodiment of a novel design of warp-knitted fabric that is particularly suitable for pull-in-place pipe repair operations is shown in Figures 3 to 5. This fabric may advantageously be incorporated as one or more fabric layers in a liner structure produced by the method previously described. Figure 3 is a binding diagram illustrating a stitching pattern structure 24 used on each bar of a warp knitting machine that is set up to fabricate a preferred embodiment of a textile material in accordance with this invention. As is well known in the field, a binding diagram is a symbolic representation of the movements of the guide bars of a knitting machine as it draws the yarn about needle positions to create a fabric. From this, a skilled operator can produce the same fabric pattern with a suitably configured machine. Each dot within the diagram represents one needle head at one point in time. This structure 24 is formed on a knitting machine with 4 bars. Each of three bars (bars 2 to 4) is arranged to form a respective layer of yarn, these layers being positioned one above the other. The fourth bar (bar 1) follows a path 26 that knits a chain stitch that loops across all four bars to hold the various layers of the structure together. The chain stitch 26 is indicated to the far left of Figure 3. Patterns 28, 32, 30 followed by bars 2, 3 and 4 are indicated successively to the right of that 26 of bar 1. Within the representative pattern for each bar 26 - 32, a horizontal row of dots represents a series of needles during one stitch forming process. Although indicated with only a short lateral extent in the diagram, each bar pattern is replicated across the width of the fabric. The rows of dots from bottom to top represent a succession of stitch-forming processes. The vertical direction of the page thus corresponds with the machine direction of the knitting process and the horizontal axis (for each bar) with the cross direction, as indicted by axes 34.

Bars 2 to 4 are arranged such that the yarn within each bar forms a layer, the layers positioned one above the other. A path 28 followed by bar 2 of the machine is shown at the second left position in figure 3. This bar 2 effects a 4-needle inlay. This inlay is one in which, for each successive stitch, the yarn is moved four needle positions alternately to the left and then to the right. This gives rise to a zig-zag yarn pattern extending over a set of four needle positions that generally proceeds along the machine direction of the fabric. A similar path 30 is followed by the yarn on bar 4. These two inlays are in phase with each other. That is, the yarn is drawn to the right on bar 2 from the same needle position as it is drawn to the right on bar 4 and, conversely, the yarn is also drawn to the left from the same needle position on both bars. On bar 3, an inlay 32 yarn extends along the machine direction.

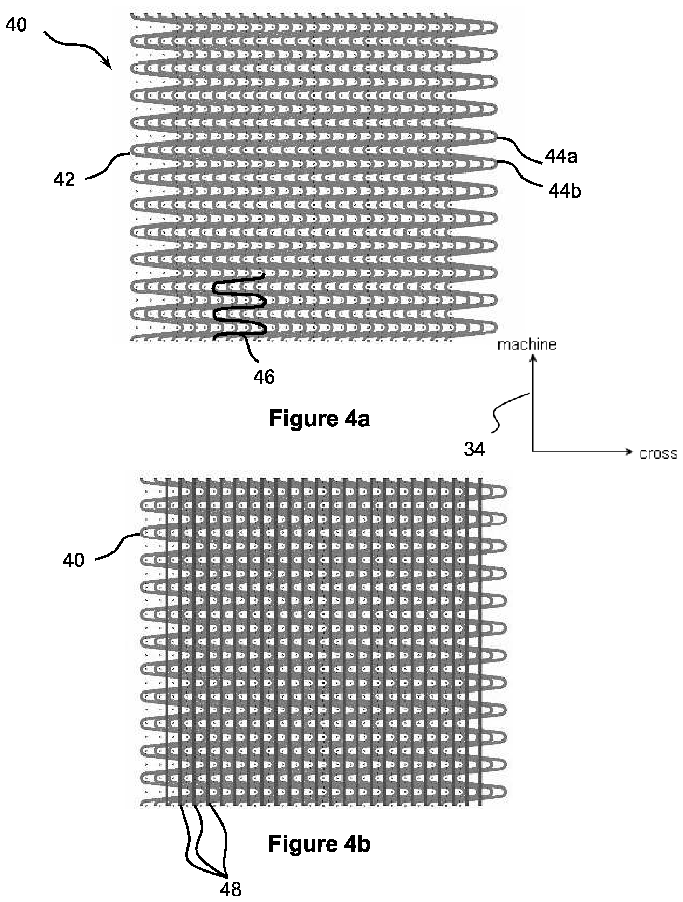

The layers of yarn, generated cumulatively on guide bars 1 to 4, are illustrated in Figures 4a to 4d. A first 4-needle inlay layer 40 is illustrated in Figure 4a. As shown in the figure, the yarns extend in a substantially horizontal direction, with loops to the left around each needle position in one row 42 and to the right around each needle position in adjacent rows 44a, 44b. The 4-needle inlay means that for each needle position, three lengths of yarn extend together in the horizontal (cross) direction, each length covering three needle spacings. This is illustrated by the highlighting of a single yarn 46 component of this layer 40.

The machine-direction inlay 48 is shown in addition to the first 4-needle inlay 40 in Figure 4b. As is made clear in the figure, the yarn in this inlay 48 extends in a substantially perpendicular direction to the straight lengths of yarn in the 4-needle inlay 40 of the previous figure.

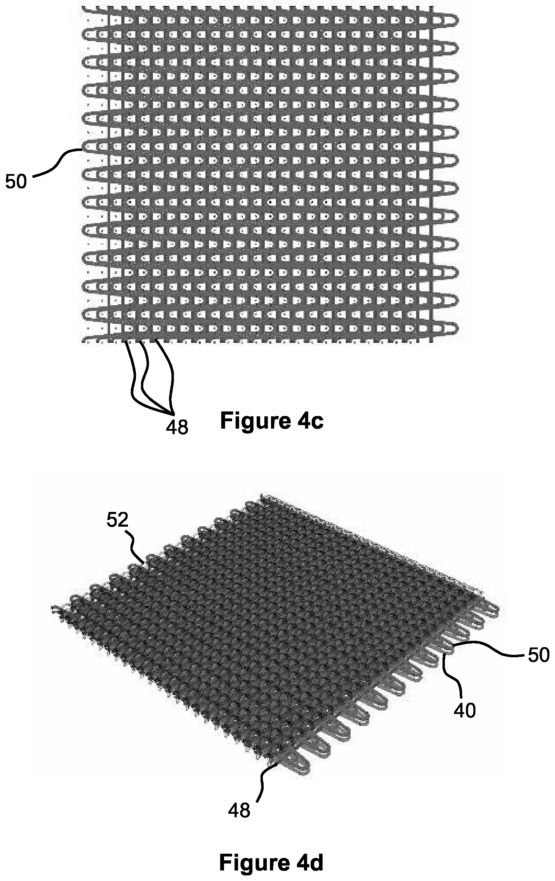

Figure 4c illustrates the Figure 4b structure with a second 4-needle inlay 50 added that overlies the first 4-needle inlay 40. The two 4-needle inlays 40, 50 are aligned in that they are in register directly above each other: the needle positions are looped in the same direction (to the left or to the right) by both bars of the fabric.

Finally, a chain stitch layer 52 is added, as shown in Figure 4d. The chain stitch extends through the three inlay layers 40, 48, 50 and binds them (loosely) together.

In its application to a pipe-lining material, the fabric described in relation to Figures 3 and 4 is formed into a tubular shape, by the method described above or otherwise, such that the machine direction is aligned with the longitudinal direction of the tube. In this way the yarn 48 on bar 3 of the knitting machine becomes an axial inlay, extending longitudinally along the tube. Ideally, this yarn is formed from glass fibre, which is a material known particularly for its strength in a straight line. It is of course well known that bends in a glass fibre represent a source of weakness, but this inlay 48 contains no such bends. The strength of the glass fibre is therefore the primary source of the fabric's strength in the axial direction.

For each of the 4-needle inlays 40, 50, straight lengths of yarn 54 (see Figure 3) extend over three needle spacings in the horizontal (cross) direction of the fabric. When the fabric is configured in the tubular shape described above, these lengths now run substantially circumferentially around the tube, three yarns being positioned together on each bar at each needle position. The yarns of these inlays 40, 50 are also preferably glass, for the same reason as for the axial inlay 48: straight glass fibre is particularly strong and so the 4-needle inlays 40, 50 contribute to the strength of the tubular fabric in the hoop direction. That is, these fibres limit radial expansion.

Overall, a fabric designed as described above has a number of features that make it particularly suitable for incorporation as at least one fabric layer in a pull-in-place liner for pipe repair and rehabilitation.

In the first instance, the axial inlay 48 provides strength in the axial direction and resists axial extension. In particular, if glass fibre is used, the axial extension can be kept very low, even under high stresses. As a tubular liner is pulled into position within a pipe, an axial force is applied to drag the weight of the liner and so may, of necessity, be high. A fabric layer in accordance with this invention includes an axial inlay that has sufficient strength not only to withstand such manipulation but also to resist axial extension as a consequence of strains induced.

As noted previously, the 4-needle inlays 40, 50 provide strength in the hoop direction that also helps withstand installation forces. However, once in position, this fabric must permit a liner to expand against the inner bore of the pipe in preparation for curing. A pull-in-place liner does not have the same requirement for radial expansion as a liner used in an inversion installation. The fabric does not need to have the flexibility required for inversion and applications tend to be limited to lining pipes that are of a relatively uniform diameter. For these purposes, a 10% expansion is sufficient. This allows the liner to be fabricated to a slightly smaller diameter than the bore of the pipe, which is sufficient to permit easy insertion and then a subsequent radial expansion once the liner is in position. In the fabric described herein, as well as the short lengths of fibre 54 in the cross direction, the 4-needle inlays 40, 50 also include looped regions 56 (see Figure 3) that link the lengths in different rows. These looped regions 56 provide some slack within the 4-needle inlay layers, which allows the fabric a small degree of expansion.

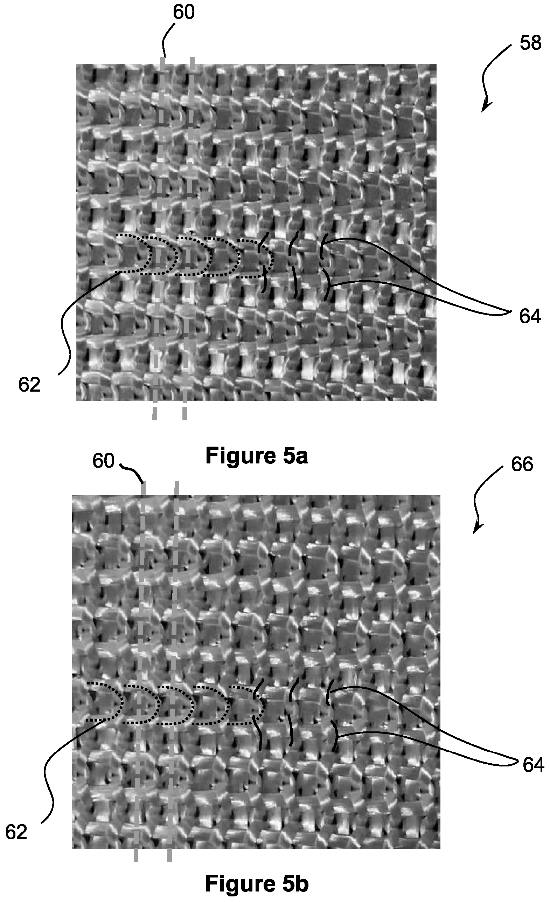

Expansion of a fabric in accordance with this aspect of the invention in shown in Figures 5a and 5b. In Figure 5a, the 4-bar warp-knitted fabric 24 is shown in its unextended configuration 58. In this figure, yarns of the axial warp inlay 48 are visible extending vertically in the image, two being highlighted by dashed lines 60; exemplary looped yarns of the 4-needle inlays 40, 50 are highlighted by dotted lines 62; and exemplary parts of the chain stitching 52 holding the inlay layers 40, 48, 50 together are highlighted with continuous lines 64. Figure 5b shows the fabric 24 in its expanded configuration 66, with parts of the structure corresponding to the highlighted parts 60, 62, 64 of Figure 5a similarly indicated. As can be seen, the axial warp inlay yarns 60 have moved apart, as have the looped yarns 62 of the 4-needle inlays. This movement is facilitated by the loose chain stitching 64 that allows the yarns to move relative to each other. In particular, the three short lengths of fibre 54 that extend together at each needle position in the cross direction are free to move within the fabric structure. With this design of fabric, a 10% radial expansion is readily achievable, whilst retaining hoop strength provided by straight lengths of glass fibre.

As well as allowing radial expansion, the loose chain stitching 48 permits the layers of the fabric to slide over each other to a small degree. This helps maintain fabric flexibility, which is typically high in a knitted fabric. Good flexibility is important when manipulating a liner into position within a pipe.

Another feature of the 4-bar fabric described above that makes it further adapted for pipe applications in particular is the ratio of axial to 4-needle inlay layers. Specifically, the fabric includes two 4-needle inlay layers to every axial inlay layer. This ensures that when the fabric is configured in a tubular shape as described above, there is twice as much glass to provide strength in the hoop direction than there is to provide strength in the axial direction. It is well known that a cylindrical product, such as a pipe or liner, when subject to internal pressures is strained both longitudinally and radially. Applied stresses are not however equally distributed: the hoop stress is twice as large as the axial stress. A fabric in accordance with this design is therefore twice as strong in the hoop direction, ensuring a uniform resistance to stresses experienced in, for example, transporting high-pressure fluids such as potable water.

A further beneficial property of this fabric in its tubular configuration is that as the tube expands radially, for example to press against a pipe for curing, it does not contract longitudinally. A longitude contraction is a common mechanism by which a radial expansion is accommodated in tubes formed of many woven and knitted fabrics. With the expansion mechanism of this present fabric however, the expansion is accommodated simply by the axial inlays moving apart, maintaining tubular length and fabric thickness. The avoidance of any contraction makes the installation process far simpler. A fabric tube is simply cut to the length required when installed. With many prior art fabric liners, such as the commonly-used polyester liner, an allowance has to be made for longitudinal contraction that will occur as the liner is expanded against the wall of a pipe. A liner of the fabric of the present invention however is amenable to a very straightforward measurement calculation: the length of liner that is required is simply measured above ground, based on the separation between neighbouring manhole covers. A pipe spanning this distance below ground can therefore be lined fully along its length, without the liner retracting away from an access point.

As made clear above, the inlay yarns are designed and oriented to provide strength in the axial and hoop directions of a tubular configuration of this fabric, with the machine direction aligned with the longitudinal axis of the tube. For the preferred application of this tubular fabric, strength is a prime requirement and so the yarn material is also selected for its strength. Ideally therefore, the yarn used within all inlay layers 40, 48, 50 is glass. However, other applications may not require the strength of glass fibre and different materials may be more suited to these applications. For example, the inlay layers could be formed from a material such as aramid, nylon, polyester, polypropylene, rayon, cotton, basalt, metals, PEEK (polyether ether ketone) and Dyneema^{®}. Increased strength, if required, may be obtained by increasing the weight (Tex) of the yarn.

Additional properties of the fabric may be refined by adjusting the settings of the warp knitting machine. For example the number of bars used in the knitting machine can be increased to provide a denser fabric. The gauge i.e. number of stitches per inch and / or stitch length can be varied, again to adjust the density of fabric. Typically, the gauge and stitch length are symmetrical. That is, the fabric is likely to have, for example, 12 stitches per inch in the cross direction and 12 rows per inch in the machine direction.

It should of course be borne in mind that the intended application for this novel fabric is as a layer of a fabric liner for use in the repair and rehabilitation of pipes. As such, the properties of the fabric should not only be considered in isolation, but also in how they impact resination and, ultimately, performance of the cured liner. Ideally, the liner material is supplied in the form of a sleeve and the resin is simply poured into the inside of the sleeve, which is then compressed to ensure an even distribution of resin throughout the liner. The resin material itself can be any of a number currently used in the art, for example epoxy resins, polyester, vinylester, silica resins as well as UV-cured resins. The use of glass fibre inlay is further advantageous: not only does it impart strength to the liner, which is helpful during the installation process, glass fibres also tend to link more effectively with resin and so are particularly strong when used as reinforcement in a resin composite. When the installation procedure is complete therefore, and the resin-soaked liner cured, the glass fibres will preferentially take up any load placed on the liner material. That is, the strength of the installed liner is also improved by use of a fabric as described herein.

Moreover, prior to curing, it will be recalled that the short lengths of fibre 54 that extend in the cross direction are free to move relative to each other. After curing, these short lengths are held in position by the resin. They are therefore set in place to provide what are effectively continuous, strong filaments. That is, after curing, the hoop strength contributed by a fabric of this structure approaches that which would be provided by continuous glass filaments extending in this direction. The avoidance of such continuous filaments however allows the pre-cured fabric to retain a degree of flexibility and expansivity that renders it amenable to a pull-in-place installation process.

The yarn used to form the chain stitching 48 is not required to make any contribution to the strength of the liner and so could be any suitable material such as polyester or glass. Ideally, the chain stitch will be able to hold adhesive that is used to adhere different material layers together, as described in the process illustrated in Figures 1 and 2. Given that the inlay layers 40, 48, 50 of the fabric of this invention are required to move with respect to one another in order to ensure that the liner remains flexible during an installation procedure, the ability to concentrate adhesive on the chain stitching is an important consideration. Without this property, there is a danger that adhesive may permeate through the fabric and bind the inlay layers together.

One application for which stringent regulations are in place is the lining of pipes that carry potable or drinking water. Water in such a pipe network is generally carried at high pressures, in the region of 40 bar for a pipe of 400 mm diameter. There are therefore both performance requirements and safety considerations to be met by a material that is used to line drinking water pipes. To date, these requirements mean that CIPP is not currently a widely-used technique for rehabilitation in this environment.

The fabric described above, and represented in the diagrams of Figures 3 to 5, has that combination of properties that permits realisation of various liner structures that may be used for CIPP repair of drinking water pipes. Specifically, tests have been carried out on the following fabric constructions.

### Sample A

| Carrier tube: | Extruded polymer tube |
|---|---|
| 1^{st} fabric layer: | 4-bar fabric of Figures 3 to 5 |
| 2^{nd} fabric layer: | 6-bar glass spacer fabric |
| 3^{rd} fabric layer: | 4-bar fabric of Figures 3 to 5 |
| 4^{th} layer: | UV-blocking film |

This sample is designed to be relatively easy to handle during a pull-in-place installation. Although glass is not a toxic substance and so, on the face of it, eminently suitable for use in these applications, there is some reluctance to risk glass fibres coming into contact with drinking water. For this reason, the carrier tube of Sample A is an extruded polymer film tube that presents a waterproof barrier on the inside surface of the liner. Two layers of the 4-bar fabric described above contribute significant hoop strength to the resultant structure. The spacer layer is a highly permeable layer that will hold resin well and encourage its flow across the thickness of the liner. It also adds bulk to the liner if a minimum thickness is required to meet a particular standard. The outer layer is a film that blocks ultraviolet (UV) light. This layer is advantageous to the installation process in that it permits pre-resination of the liner by a UV-cured resin. In order to reduce work required at the installation site, it is desirable to be able to supply the liner material pre-resinated, leaving only the positioning and curing parts of the procedure to be carried out on site. This is not easily achievable with 2-part epoxy resins, which will cure under ambient conditions. In general, such resins are mixed and applied at the installation site or if applied off-site, the resinated liner has to be transported in a refrigerated van. A UV-cured resin however can be pre-applied if exposure to sunlight can be avoided. This is achieved by the addition of a UV-barrier layer to the outside of the liner, which therefore prevents premature curing of resin contained within the barrier. In this example, the UV-barrier layer is a mono PE (polyethylene) coextruded film equipped with a UV barrier, which is wrapped around the tubular fabric structure. Once such a liner is in position within a pipe, the UV barrier layer will be pressed against the pipe and curing is effected by passing a UV light through the interior of the tube, the polymer inner layer being transparent to UV light.

It is envisaged that this Sample A structure can be assembled, by the method described above in relation to Figures 1 - 2 or otherwise, to provide a liner structure suitable for lining pipes with a diameter ranging from DN100 to DN800.

A sample with maximum hoop strength can be built up simply by using additional layers of the novel fabric described herein. For example:

### Sample B

| Carrier tube: | Extruded polymer tube |
|---|---|
| 1^{st} fabric layer: | 4-bar fabric of Figures 3 to 5 |
| 2^{nd} fabric layer: | 4-bar fabric of Figures 3 to 5 |
| 3^{rd} fabric layer: | 4-bar fabric of Figures 3 to 5 |
| 4^{th} fabric layer: | 4-bar fabric of Figures 3 to 5 |
| 5^{th} layer | UV-blocking film |

A liner built to the specification of Sample B above has been found to have a modulus in compression of more than 9 MPa.

Patch repair is a version of a pull-in-place installation that uses only a small section of liner (1 - 2 m) to target a specific defect, such as a fault at a join or an isolated hole. Such damage may be caused, for example, in a sewer or drain by root ingress or pressure exerted as a result of movement of the surrounding earth or foundations. In the prior art, the liner material for patch repair is typically a chopped glass matting that is impregnated with a silicate resin. The resinated matting is wrapped around an expanding bladder and pulled into place within the pipe. The bladder is then expanded and the resin cured. A liner structure based on this present fabric that is suitable for patch repair is set out below, as Sample C. This liner may be fabricated to line a range of pipe diameters from DN100 to DN800.

### Sample C

| Carrier tube: | Warp-knitted glass tubular fabric |
|---|---|
| 1^{st} fabric layer: | 4-bar fabric of Figures 3 to 5 |
| 2^{nd} fabric layer: | 4-bar fabric of Figures 3 to 5 |
| 3^{rd} fabric layer: | 4-bar fabric of Figures 3 to 5 |
| 4^{th} layer | UV-blocking film |

The warp-knitted glass tubular fabric is a product supplied by Scott & Fyfe Limited. It is a seamless glass knitted product that is highly flexible and conformable and so may itself be incorporated in a liner for inversion installations. In this application, the warp-knitted glass fabric provides the carrier tube with a high level of flexibility that assists with manipulating the liner through the fabrication process. Because it is predominantly glass, the carrier tube is also able to bond well to the glass material in the fabrics described herein that are added sequentially to the carrier tube.

A DN200 tube of Sample C material has been tested and found to be readily able to carry fluid at a pressure of 40 bar. It also has a modulus in compression of more than 9 MPa. For potable water applications, this modulus must be at least 5 MPa and, for some applications, at least 10 MPa. That is, this Sample C looks very promising for use in the pull-in-place repair of potable water pipes.

Although the outer layer in each of the samples described above is specified as a UV-blocking film, this is only to facilitate use of a UV-cured resin. If resin that requires different curing conditions is used, then a number of know alternatives may be employed to contain the resin within the sleeve. For example thermoplastic polyurethane (TPU) or an acrylic acid tetrabutyl ester (AAE) type film, or indeed any of a number of known materials, depending on compatibility with the textile layer, application, availability and other relevant factors.

As noted above, the prior art fabric commonly used in patch repair is a glass fibre matting in which 50 mm lengths of glass fibre are randomly oriented through the mat. This provides the prior art liner with a strong fibre reinforcement. The embodiment of 4-bar fabric described above and used to prepare Sample C provides an alternative glass reinforcement structure. As previously stated, the 4-needle inlay layers 40, 50 of the fabric described herein include short lengths 54 of glass fibre that are aligned generally in the hoop direction. Each short length 54 spans three needle spacings and so, for a standard gauge knit, is around 10 mm in length. Although this is shorter than the glass fibre of the prior art, and therefore expected to provide a weaker reinforcement, the fact that these inlay lengths are arranged in parallel, and not randomly oriented, targets the reinforcement in the desired direction (hoop), compensating for the reduced strength.

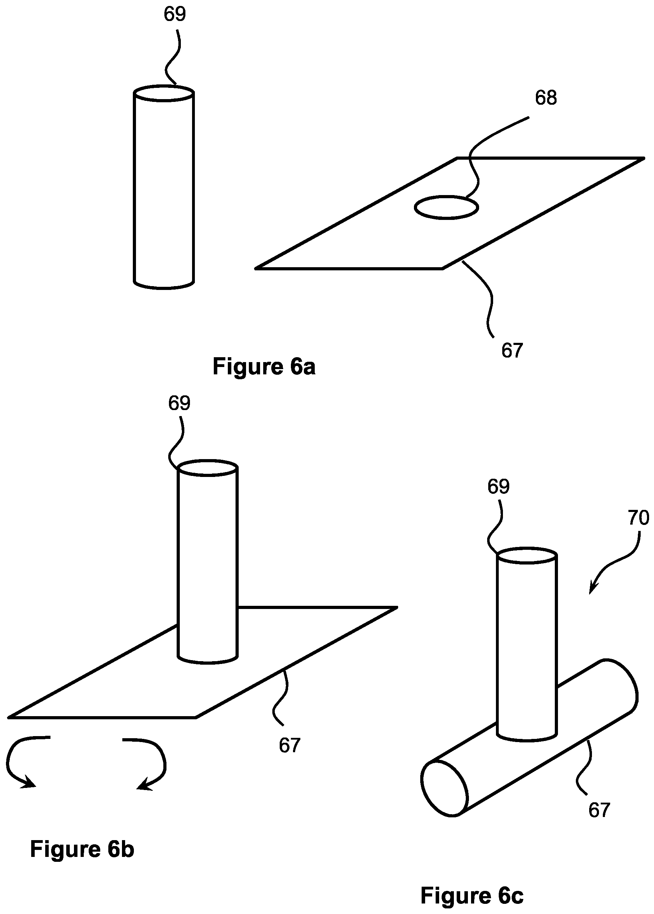

Figure 6 is a diagram illustrating a further application of the fabric described above, and represented in the diagrams of Figures 3 to 5, that exploits an additional property of the fabric. This application is to form a T-shaped liner that is specifically for repair of a junction between pipes. Such structures, known as T-liners, may, for example, be used to line a main to lateral intersection in a sewer, water or other pipe system. T-liners tend to be used for sealing rather than fully lining a pipe and so fabric strength is less of a priority. The T-shape of the liner however means that, somehow, a first tubular shape (the lateral liner, for example) must be connected to a second tubular shape (the main liner, for example). Manoeuvring a T-liner into position within the junction is, moreover, not straightforward. Prior to insertion, the T-liner is resinated and wrapped around an expandable bladder. Tape is used to hold the components together, with the lateral liner folded downwards. Once in position within the junction, the bladder is inflated, which breaks the tape and presses both parts of the liner against the pipe. The resin may then be cured to complete the installation. A problem encountered in prior art T-liners is that the join between the two tubular structures is a source of weakness that is prone to failure during this installation process. Failure may be in the stitching itself, or stresses in the region that cause the fabric to overstretch. In either case, sealing ability is reduced and the fitted T-liner may not perform as required.

In a T-liner embodiment of this invention, a sheet of fabric with a structure as set out below, Sample D, is constructed:

### Sample D

| | |
|---|---|
| 1^{st} fabric layer: | 4-bar fabric of Figures 3 to 5 |
| 2^{nd} fabric layer: | 4-bar fabric of Figures 3 to 5 |
| 3^{rd} fabric layer: | 4-bar fabric of Figures 3 to 5 |
| 4^{th} layer | TPU film |

In Figure 6a, a flat sheet of fabric 67 of Sample D has a hole 68 cut through it, roughly centrally. The fabric structure is maintained by the TPU film and also by a hem or seam that is sewn around the cut edge. The hole 68 is sized to connect with an end of a tubular liner structure 69. The tubular structure 69 is, for example, two layers of a warp-knitted glass fabric with a TPU coating. A suitable warp-knitted fabric is described above in relation to the carrier tube of Sample C. The tubular structure 69 is then placed above the hole 68, as shown in Figure 6b, and the two pieces of fabric 67, 69 are sewn together: the edge of the hole 68 joined to the end circumference of the tubular structure 69.

The TPU film that covers the fabric sheet 67 is then drawn back from one of the longitudinal edges that is perpendicular to the straight inlay. This leaves a thin strip of exposed fabric extending in the cross direction along one edge of the sheet 67. The length of the fabric sheet 67 in the machine direction is such that it will cover the circumference of the pipe in which it is to be fitted. The sheet 67 is then rolled, as indicated by arrows in Figure 6b, into a tubular shape around an expandable bladder (not shown). The tube is oriented such that the straight inlay extends around the circumference. The line of exposed fabric, which therefore extends longitudinally, is positioned internally such that it is in contact with an inner fabric layer of the structure. The completed T-liner 70 is shown in Figure 6c: the fabric sheet 67 adopts a tubular structure to line the main pipe; the perpendicular tubular structure 69 is to line a lateral, or secondary, pipe.

The fabric of this invention is advantageous in this application for a number of reasons. First, as outlined above, the insertion technique requires some manipulation to get the liner into position. In particular, in order to position the lateral liner, the T-liner is first taped around a bladder, which is then pulled into a position just beyond the junction. During this process, the lateral liner is held in a folded position, tilted away from the direction of travel. Once past the junction, the bladder is pulled in the reverse direction, the upper tip of the lateral liner is held by the edge of the junction, forcing it into a perpendicular position to line the lateral pipe. The bladder is then inflated to press the T-liner against the pipes that form the junction.

Prior art fabrics tend to be loose and deformable structures, which assists with getting the T-shaped structure into position. The downside however is that any stitching is particularly weak and there is a danger of the fabric becoming overstretched in this region. This is liable to happen during bladder expansion, when relatively large expansion forces are exerted, and also during the process that positions the lateral liner. It has been found that there is little tolerance for misalignment between junction and T-liner, if excess forces are exerted in manipulating the lateral liner, the liner can become damaged in its sewn region.

With the T-liner fabricated as set out above, the fabric of the main liner sheet 67 is less deformable and more stable than fabrics used in the prior art. Generally, knitted fabrics do not lend themselves to sewing. The sewn thread pulls the knitted yarns out of alignment, which affects the fabric properties. In this instance however, the strong glass yarns are held in relatively rigid position, which is less affected by the sewn thread: the stitching itself is able to hold more of the liner material and the fabric is less likely to deform in the region of the seam. Advantageously therefore, there is a reduced risk of bladder expansion damaging the sewn seam and positioning for lateral-liner insertion is less critical.

In fabricating a T-liner using this fabric, the TPU film is removed along a longitudinal length and this exposed length is then rolled into position adjacent an inner fabric layer. When the bladder is expanded, the liner expands simply by adjusting the position of this exposed length i.e. it moves circumferentially across the inner tubular surface. The length of the fabric sheet is such that, when expanded to the inner diameter of the pipe, an overlap still remains. When the resin is cured, fabric is stuck to fabric along this seam, which, assuming the same fabrics are used for the 1^{st} and 3^{rd} layers, forms a very strong bond. It is preferred that, for this application, the straight inlays are oriented to extend circumferentially and so provide the liner with its hoop strength. This is where greater reinforcement is required for this installation procedure.

The material used to form the lateral part of the T-liner is less critical than the material of the main liner. Although a warp-knitted glass fabric is described in relation to this embodiment, other known flexible tubular liner materials can also be used.

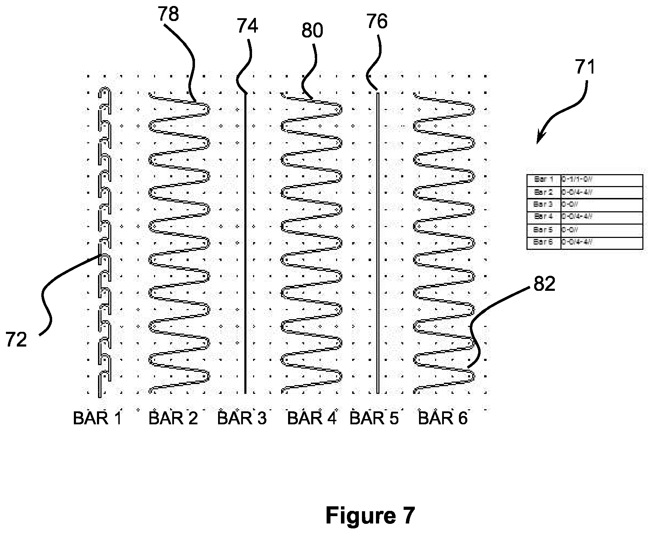

Figure 7 is a binding diagram showing a knitting structure used on each bar for a second embodiment 71 of the textile material in accordance with this invention. This second embodiment 71 includes two additional layers in relation to the first embodiment and so is generated using a 6 bar warp knitting machine. The pattern followed on each bar is indicated from left to right in the diagram, with each bar pattern being replicated across the width of the fabric. As before, this fabric may advantageously be incorporated as one or more fabric layers in a liner structure.

In forming the structure of this second embodiment, each of five bars (bars 2 to 6) is arranged to form a respective layer of yarn, these layers being positioned one above the other. The sixth bar (bar 1) follows a path 72 that knits a chain stitch that loops across all six bars to hold the various layers of the structure together. The chain stitch 72 is indicated to the far left of Figure 6. As with the first embodiment, the structure is formed from alternating layers of axial 74, 76 and 4-needle 78, 80, 82 inlays. In this embodiment, bars 3 and 5 effect the axial inlays 74, 76 and bars 2, 4 and 6 the 4-needle inlays 78, 80, 82. In other words, this second embodiment of the fabric of this invention, differs from the first embodiment by the addition of one additional axial inlay and one additional 4-needle inlay. This indicates a mechanism by which weight and thickness of the fabric can be increased. Any liner product formed from this fabric will be stronger and thicker than a similar product made with equivalent layers of the previously-described fabric.

Other variations in structure are possible. For example, the 4-needle inlay layers 78, 80, 82 may be replaced by 6-, 7- or 8-needle inlays. By skipping more needle positions, the glass fibres in these layers extend for longer lengths in the cross direction. In a tubular product therefore, hoop strength is increased. Such a fabric is therefore denser and will have an improved ability to withstand higher pressures. However, the compromise is a reduced radial expansivity. Conversely, replacing the 4-needle inlay by a 2- or 3-needle inlay, would result in a fabric with increased radial expansivity at a cost of reduced hoop strength. It will be understood therefore that the properties of a fabric in accordance with this invention can be tailored by adjusting both the number of inlay layers and parameters of the non-axial inlays. A 5% expansion may be acceptable in some applications where increased strength is an overriding factor, or maybe to provide reinforcement that is more balanced in hoop and axial directions.

Before presenting the claims, various features of the disclosure are presented in the following numbered clauses.
1. A method of preparing a multilayered fabric for use in lining pipes, the method comprising the steps of:
   (a) Providing a flattened carrier tube with first fold lines defined by flattened edges of the tube;
   (b) Placing a first fabric layer above the carrier tube, with intermediate adhesive, and a second fabric layer below the carrier tube, with intermediate adhesive, each of the first and second fabric layers having a width that is approximately equal to or greater than a width of the flattened carrier tube, the placing being such that each edge of the flattened carrier tube is aligned with at least one edge of at least one of the fabric layers;
   (c) Laminating the carrier tube and fabric layer assembly;
   (d) Opening and re-flattening the coated carrier tube such that the carrier tube has second fold lines defined by its flattened edges, wherein the second fold lines are not coincident with the first fold lines;
   (e) Placing a third fabric layer above the laminated carrier tube assembly, with intermediate adhesive, and a fourth fabric layer below the laminated carrier tube assembly, with intermediate adhesive, each of the third and fourth fabric layers having a width that is approximately equal to or greater than a width of the flattened laminated carrier tube assembly, the placing being such that each edge of the flattened laminated carrier tube assembly is aligned with at least one edge of at least one of the fabric layers; and
   (f) Laminating the laminated carrier tube assembly and third and fourth fabric layers.
2. A method in accordance with clause 1 wherein the width of the first and second fabric layers is greater than the width of the flattened carrier tube and each aligned at one edge with a respective edge of the flattened carrier tube; and the width of the third and fourth fabric layers is greater than the width of the flattened laminated carrier tube assembly and each aligned at one edge with a respective edge of the flattened carrier tube assembly;, thereby creating in the prepared fabric, narrow longitudinally extending regions of an additional layer's thickness where each fabric layer overlaps the fabric layer that is subject to the same placing step.
3. A method in accordance with clause 1 wherein the width of the first and second fabric layers is substantially equal to the width of the flattened carrier tube and the width of the third and fourth fabric layers is substantially equal to the width of the flattened laminated carrier tube assembly, thereby ensuring that in the prepared fabric, the fabric layers subject to the same placing step abut each other.
4. A method in accordance with any one of clauses 1 to 3 wherein the method includes the additional steps of:
   (g) Opening and re-flattening the laminated carrier tube assembly such that the carrier tube has third fold lines defined by its flattened edges, wherein the third fold lines are not coincident with either the first or second fold lines;
   (h) Placing a fifth fabric layer, with intermediate adhesive, above the laminated carrier tube assembly and a sixth fabric layer, with intermediate adhesive, below the laminated carrier tube assembly, each of the fifth and sixth fabric layers having a width that is approximately equal to or greater than a width of the flattened laminated carrier tube assembly, the placing being such that each edge of the flattened laminated carrier tube assembly is aligned with at least one edge of at least one of the fabric layers; and
   (i) Laminating the laminated carrier tube assembly and fifth and sixth fabric layers.
5. A method in accordance with clause 2 wherein the method includes the additional steps of:
   (g) Opening and re-flattening the laminated carrier tube assembly such that the carrier tube again has flattened edges at the first fold lines;
   (h) Placing a fifth fabric layer, with intermediate adhesive, above the laminated carrier tube assembly and a sixth fabric layer, with intermediate adhesive, below the laminated carrier tube assembly, each of the fifth and sixth fabric layers having a width that is greater than a width of the flattened laminated carrier tube assembly and each aligned at one edge with a respective edge of the flattened laminated carrier tube assembly; the placing step being such that each narrow longitudinally extending region of an additional layer's thickness arising where the fifth and sixth fabric layers overlap is disposed to an opposite side of the respective first fold line to the narrow longitudinally extending region arising where the first and second fabric layers overlap; and
   (i) Laminating the laminated carrier tube assembly and fifth and sixth fabric layers.
6. A method in accordance with any one of clauses 1 to 5 wherein the intermediate adhesive is applied to each fabric layer prior to its placing above or below the carrier tube or carrier tube assembly.
7. A method in accordance with any one of clauses 1 to 6 wherein the intermediate adhesive is in the form of an adhesive web.
8. A material for use in lining pipes, the material comprising:
   a first set of inlay yarns (28), each yarn of which has a path that is achieved by moving a first predetermined number of needle positions to the left and then a second predetermined number of needle positions to the right in successive stitch-forming processes;
   a second set of inlay yarns (32) that extend in a machine direction through the fabric;
   a third set of inlay yarns (30), each yarn of which has a path that is achieved by moving a third predetermined number of needle positions to the left and then a fourth predetermined number of needle positions to the right in successive stitch-forming processes; and
   a set of warp-knitted yarns (26) that interlink with the inlay yarns (28, 30, 32).
9. A material according to clause 8 wherein the first predetermined number of needle positions is the same as the second predetermined number of needle positions such that the path followed by the first set of inlay yarns extends to one and then another side of an axis that is generally parallel to the machine direction.
10. A material according to clause 9 wherein the third predetermined number of needle positions is the same as the fourth predetermined number of needle positions such that the path followed by the third set of inlay yarns extends to one and then another side of an axis that is generally parallel to the machine direction.
11. A material according to clause 9 or 10 wherein the first, second, third and fourth predetermined numbers of needle positions are all equal.
12. A material according to clause 11 wherein the paths followed by the first set of inlay yarns are aligned with the paths followed with the third set of inlay yarns.
13. A material according to clause 11 or 12 wherein the predetermined number of needle positions is 4.
14. A material according to any one of clauses 8 to 13 wherein the first, second and third sets of inlay yarns are all glass fibre.
15. A material according to any one of clauses 8 to 14 wherein the warp-knitted yarn is glass fibre.
16. A material according to any one of clauses 8 to 15 wherein the material includes a fourth set of inlay yarns (76) that extend in a machine direction through the fabric and a fifth set of inlay yarns (82), each yarn of which has a path that is achieved by moving a fifth predetermined number of needle positions to the left and then a sixth predetermined number of needle positions to the right in successive stitch-forming processes.
17. A material according to clause 16 wherein the first, second, third, fourth, fifth and sixth predetermined numbers of needle positions are all equal.
18. A liner for pipe repair or rehabilitation, the liner comprising a material in accordance with any one of clauses 8 to 17 that is arranged in a tubular configuration with the second set of inlay yarns (32) aligned with a longitudinal axis of the tubular configuration.
19. A liner according to clause 18 wherein the material in a tubular configuration is attached to an inner carrier tube.
20. A liner according to clause 19 wherein the inner carrier tube is a film tube.
21. A liner according to clause 20 wherein the inner carrier tube is a knitted tube.
22. A liner according to any one of clauses 19 to 21 comprising at least two layers of the material in a tubular configuration, an inner layer being attached to the carrier tube.
23. A liner according to any one of clauses 18 to 22 wherein the liner also includes an outer layer of a substance that is substantially opaque to ultraviolet light.
24. A liner according to clause 23 wherein the tubular material is infused in a resin that is curable by exposure to ultraviolet light.
25. A liner for pipe repair or rehabilitation, the liner comprising a first tubular fabric (69) one end of which is connected by a sewn seam to an opening (68) made in a fabric sheet (67) of a material in accordance any one of clauses 8 to 17, the fabric sheet (67) being configurable to a tubular configuration from which the sewn first tubular fabric extends in lateral direction.
26. A method in accordance with any one of clauses 1 to 7 wherein at least one of the fabric layers is a material in accordance with any one of clauses 8 to 17 and wherein the step of placing the fabric layer above the carrier tube or carrier tube assembly includes the step of aligning the second set of inlay yarns (32) with a longitudinal axis of the carrier tube.
27. A method of producing a fabric to reinforce a resin, the method comprising:
   (a) Determining required strength of fabric in a machine direction;
   (b) Determining required strength of fabric in a cross direction;
   (c) Selecting first and second sets of bars of a warp knitting machine, wherein adjacent bars are selected in different sets, there being one more bar in the second set than the first;
   (d) Setting each of the first set of bars to produce a straight inlay in the machine direction, wherein the number of bars in the first set depends on the strength determined in step (a);
   (e) Setting each of the second set of bars to produce a stepped inlay in which yarn paths within the inlay move a predetermined number of needle positions to the left and then the predetermined number of needle positions to the right in successive stitch-forming processes, whereby alternating movements to the left and right result in a series of short lengths of yarn that are aligned generally at an angle to the cross direction, wherein the predetermined number of needle positions moved and number of bars in the second set depend on the strength determined in step (b);
   (f) Setting a further bar of the warp knitting machine to produce a warp-knitted yarn that interlinks with the straight and stepped inlays in an arrangement sufficiently loose to allow yarns within the straight and stepped inlays to move relative to each other ;
   (g) Loading each bar of the first and second sets of bars on the warp knitting machine with an inlay yarn and the further bar with an interlinking yarn; and
   (h) Operating the machine to produce a fabric.
28. A method according to clause 27 wherein the method includes the step of selecting the inlay yarn from the group consisting of: glass fibre, polyester, aramid, Dyneema^{®}, peek and basalt yarns; glass or basalt rovings.
29. A method according to clause 27 or 28 wherein the method includes the step of selecting the interlinking yarn from the group consisting of: glass fibre, polyester, polypropylene and nylon yarns.
30. A method according to any one of clauses 27 to 29 wherein the predetermined number of needle positions moved to the left and right is selected from the group consisting of: 2, 3, 4, 5, 6, 7 or 8.

## Claims

1. A method of preparing a multilayered fabric for use in lining pipes, the method comprising the steps of:
(a) Providing a flattened carrier tube with first fold lines defined by flattened edges of the tube;
(b) Placing a first fabric layer above the carrier tube, with intermediate adhesive, and a second fabric layer below the carrier tube, with intermediate adhesive, each of the first and second fabric layers having a width that is approximately equal to or greater than a width of the flattened carrier tube, the placing being such that each edge of the flattened carrier tube is aligned with at least one edge of at least one of the fabric layers;
(c) Laminating the carrier tube and fabric layer assembly;
(d) Opening and re-flattening the coated carrier tube such that the carrier tube has second fold lines defined by its flattened edges, wherein the second fold lines are not coincident with the first fold lines;
(e) Placing a third fabric layer above the laminated carrier tube assembly, with intermediate adhesive, and a fourth fabric layer below the laminated carrier tube assembly, with intermediate adhesive, each of the third and fourth fabric layers having a width that is approximately equal to or greater than a width of the flattened laminated carrier tube assembly, the placing being such that each edge of the flattened laminated carrier tube assembly is aligned with at least one edge of at least one of the fabric layers; and
(f) Laminating the laminated carrier tube assembly and third and fourth fabric layers
wherein at least one of the fabric layers comprises:
a first set of inlay yarns that are stepped, a second set of inlay yarns that are straight, and a third set of inlay yarns that are stepped; and
a set of warp-knitted yarns that interlink with the inlay yarns; and
wherein the step of placing the at least one fabric layer above or below the carrier tube or carrier tube assembly includes the step of aligning the second set of straight inlay yarns with a longitudinal axis of the carrier tube.

2. A method according to claim 1, wherein the width of the first and second fabric layers is greater than the width of the flattened carrier tube and each aligned at one edge with a respective edge of the flattened carrier tube; and the width of the third and fourth fabric layers is greater than the width of the flattened laminated carrier tube assembly and each aligned at one edge with a respective edge of the flattened carrier tube assembly, thereby creating in the prepared fabric, narrow longitudinally extending regions of an additional layer's thickness where each fabric layer overlaps the fabric layer that is subject to the same placing step.

3. A method according to claim 1, wherein the width of the first and second fabric layers is substantially equal to the width of the flattened carrier tube and the width of the third and fourth fabric layers is substantially equal to the width of the flattened laminated carrier tube assembly, thereby ensuring that in the prepared fabric, the fabric layers subject to the same placing step abut each other.

4. A method according to any one of claims 1 to 3, wherein the method includes the additional steps of:
(g) Opening and re-flattening the laminated carrier tube assembly such that the carrier tube has third fold lines defined by its flattened edges, wherein the third fold lines are not coincident with either the first or second fold lines;
(h) Placing a fifth fabric layer, with intermediate adhesive, above the laminated carrier tube assembly and a sixth fabric layer, with intermediate adhesive, below the laminated carrier tube assembly, each of the fifth and sixth fabric layers having a width that is approximately equal to or greater than a width of the flattened laminated carrier tube assembly, the placing being such that each edge of the flattened laminated carrier tube assembly is aligned with at least one edge of at least one of the fabric layers; and
(i) Laminating the laminated carrier tube assembly and fifth and sixth fabric layers.

5. A method according to claim 2, wherein the method includes the additional steps of:
(g) Opening and re-flattening the laminated carrier tube assembly such that the carrier tube again has flattened edges at the first fold lines;
(h) Placing a fifth fabric layer, with intermediate adhesive, above the laminated carrier tube assembly and a sixth fabric layer, with intermediate adhesive, below the laminated carrier tube assembly, each of the fifth and sixth fabric layers having a width that is greater than a width of the flattened laminated carrier tube assembly and each aligned at one edge with a respective edge of the flattened laminated carrier tube assembly; the placing step being such that each narrow longitudinally extending region of an additional layer's thickness arising where the fifth and sixth fabric layers overlap is disposed to an opposite side of the respective first fold line to the narrow longitudinally extending region arising where the first and second fabric layers overlap; and
(i) Laminating the laminated carrier tube assembly and fifth and sixth fabric layers.

6. A method according to any one of claims 1 to 5, wherein the intermediate adhesive is applied to each fabric layer prior to its placing above or below the carrier tube or carrier tube assembly.

7. A method according to any one of claims 1 to 6, wherein the intermediate adhesive is in the form of an adhesive web.

8. A method according to any one of claims 1 to 7, wherein
each yarn of the first set of inlay yarns has a path that is achieved by moving a first predetermined number of needle positions to the left and then a second predetermined number of needle positions to the right in successive stitch-forming processes;
each yarn of the second set of inlay yarns extends in a machine direction through the fabric; and
each yarn of the third set of inlay yarns has a path that is achieved by moving a third predetermined number of needle positions to the left and then a fourth predetermined number of needle positions to the right in successive stitch-forming processes.

9. A method according to claim 8, wherein the first predetermined number of needle positions is the same as the second predetermined number of needle positions such that the path followed by the first set of inlay yarns extends to one and then another side of an axis that is generally parallel to the machine direction.

10. A method according to claim 9, wherein the third predetermined number of needle positions is the same as the fourth predetermined number of needle positions such that the path followed by the third set of inlay yarns extends to one and then another side of an axis that is generally parallel to the machine direction.

11. A method according to claim 9 or 10 wherein the first, second, third and fourth predetermined numbers of needle positions are all equal.

12. A method according to claim 11, wherein the paths followed by the first set of inlay yarns are aligned with the paths followed with the third set of inlay yarns.

13. A method according to claim 11 or 12, wherein the predetermined number of needle positions is 4.

14. A method according to any one of the preceding claims, wherein at least one of the first, second and third sets of inlay yarns and the warp-knitted yarn is glass fibre.

15. A method according to any one of the preceding claims, wherein at least one of the fabric layers comprises a fourth set of inlay yarns that extend in a machine direction through the fabric and a fifth set of inlay yarns, each yarn of which has a path that is achieved by moving a fifth predetermined number of needle positions to the left and then a sixth predetermined number of needle positions to the right in successive stitch-forming processes.
